# EUROPÄISCHE PATENTANMELDUNG

(11) **EP 4 610 511 A1**
(43) Veröffentlichungstag der Anmeldung: **03.09.2025**
(21) Anmeldenummer: 25158484.3
(22) Anmeldetag: 18.02.2025
(51) Int. Cl.: F16C 33/14, F16C 33/64, F16C 33/20, B05D 1/00

(54) **VERFAHREN UND ANORDNUNG ZUM AUFBRINGEN EINER BESCHICHTUNG AUF EINE LAGERKOMPONENTE**

(30) Priorität: 28.02.2024 DE 102024201847
(71) Anmelder: Aktiebolaget SKF, 415 50 Göteborg (SE)
(72) Erfinder: PREIS, Karl, 4050 Traun (AT); SCHWARZ, Bernhard, 4400 Steyr (AT); SAXENHUBER-STELLNBERGER, René, 4400 Steyr (AT)
(74) Vertreter: Kuhstrebe, Jochen

(57) **Zusammenfassung**

Offenbart wird ein Verfahren zum Aufbringen einer Beschichtung auf eine Lagerkomponente (2), wobei das Verfahren, die folgenden Schritte umfasst:
Bereitstellen (S1) einer Lagerkomponente(2),
Auftragen (S3) einer definierten Menge einer Beschichtung,
Aushärten (S5) der Beschichtung, wobei die Lagerkomponente (2) zumindest während des Aushärtens mit einer ersten Rotationsgeschwindigkeit rotiert.

## Beschreibung

### Technisches Gebiet

Vorliegende Erfindung betrifft ein Verfahren zum Aufbringen einer Beschichtung auf eine Lagerkomponente gemäß dem Oberbegriff von Patentanspruch 1. Ferner betrifft die vorliegende Erfindung eine Anordnung zum Aufbringen einer Beschichtung auf eine Lagerkomponente.

### Technischer Hintergrund

Abhängig von einem Einsatzgebiet einer Lagerkomponenten kann die Lagerkomponente mit einer Beschichtung versehen sein, um sie beispielsweise vor Verschleiß und/oder Korrosion zu schützen, thermisch und/oder elektrisch zu isolieren, und/oder abzudichten. Dabei kann die Beschichtung beispielsweise in einer flüssigen oder pulverförmigen Vorstufe vorliegen.

Bei Lagerkomponenten ist es bekannt, eine in flüssiger Vorform vorliegende Beschichtung manuell mittels einer Bürste oder einer Rolle aufzutragen, so dass nur bedingt eine Kontrolle über die aufgetragene Menge und/oder eine Verteilung der Beschichtung auf der Lagerkomponente vorliegt. Dies kann Probleme in der Gleichförmigkeit der Verteilung der Beschichtung verursachen.

Nach dem Auftragen wird die Beschichtung üblicherweise getrocknet und ausgehärtet. Da dies einige Zeit in Anspruch nehmen kann, kann es passieren, dass aufgrund der Gravitationskraft die Verteilung der zunächst flüssigen Beschichtung ungleichmäßig wird. Es ist auch möglich, dass sich Tropfen bilden, die sich an in Gravitationsrichtung gesehen unteren Teil der Lagerkomponente ansammeln können. Dies hat den Nachteil, dass eine gleichmäßige bzw. homogene Verteilung der Beschichtung nicht immer sichergestellt werden kann.

Im Falle einer Tropfenbildung kann es zusätzlich notwendig werden, die Tropfen nach dem Aushärten zu entfernen. Des Weiteren kann es zu einem Verlust der Beschichtung kommen, wenn die noch flüssige Beschichtung von der Lagerkomponente fließt. Dadurch kann das Risiko bestehen, dass die Beschichtung auf der Lagerkomponente nicht gleichmäßig ausgebildet ist, so dass eine Funktionalität der Beschichtung nicht sichergestellt werden kann.

Ein besonders großes Risiko, dass die Beschichtung von der Lagerkomponente tropft, besteht insbesondere dann, wenn die Lagerkomponente zum Aushärten der Beschichtung einer Wärmebehandlung unterzogen wird, da mit zunehmender Temperatur, die Viskosität der Beschichtung fällt, wodurch das Risiko der Tropfenbildung weiter erhöht ist.

Es ist deshalb Aufgabe vorliegender Erfindung, ein Verfahren und eine Anordnung zum Auftragen einer Beschichtung auf eine Lagerkomponente bereitzustellen, bei dem bzw. der das Risko für eine Tropfenbildung reduziert ist und/oder eine Homogenität der Beschichtung verbessert ist.

### Zusammenfassung der Erfindung

Diese Aufgabe wird durch ein Verfahren zum Aufbringen einer Beschichtung auf eine Lagerkomponente gemäß Patentanspruch 1 gelöst.

Im Folgenden wird ein Verfahren zum Aufbringen einer Beschichtung auf eine Lagerkomponente bereitgestellt, wobei das Verfahren, die Schritte eines Bereitstellens einer Lagerkomponente, eines Auftragens einer definierten Menge einer Beschichtung, sowie eines Aushärtens der Beschichtung umfasst.

Bei der Lagerkomponente kann es sich insbesondere um einen Lagerring, wie beispielsweise Lagerring für ein Wälzlager oder Gleitlager handeln. Bei dem Ring kann es sich insbesondere um einen Innenring oder Außenring handeln. Des Weiteren kann die Lagerkomponente ein Wälzkörper wie beispielsweise eine Zylinderrollen, eine Kegelrolle, eine Nadelrolle, eine Pendelrolle oder dergleichen sein. Die Lagerkomponente kann beispielsweise aus einem Metall, einer Keramik und/oder einem Verbundwerkstoff hergestellt sein.

Bevorzugt kann das Auftragen der definierten Menge der Beschichtung über einen Dosierungssystem erfolgen. Beispielsweise kann das Dosierungssystem ein Robotersystem mit einer Düse sein, die dazu ausgebildet ist, eine definierte Menge der Beschichtung auf die Lagerkomponente zu sprühen. Insbesondere kann das Dosiersystem dazu ausgebildet sein, eine definierte Menge der Beschichtung pro Fläche reproduzierbar aufgebracht werden. Dies ermöglicht eine besonders gleichmäßige Schichtdicke zu erreichen. Weiterhin kann eine Temperatur der Beschichtung beim Auftragen durch das Dosierungssystem kontrolliert werden, so dass die Beschichtung mit einer definierten Temperatur auf die Lagerkomponente aufgebracht wird. Bevorzugt erfolgt das Auftragen der Beschichtung kontaktlos.

Bei der Beschichtung kann es sich insbesondere um eine Versiegelung, wie beispielsweise eine Farbe, ein Lack, ein Harz, eine Harzgemisch, oder dergleichen handeln. Ferner kann die Beschichtung auch über eine bereits aufgetragene erste Beschichtung aufgetragen werden. Insbesondere kann die erste Beschichtung eine thermische Spritzschicht sein. Beispielsweise kann die erste Beschichtung mit einem Plasmasprayverfahren aufgetragen sein und eine poröse Oberfläche aufweisen. Diese poröse Oberfläche kann dann wiederum mit einer zumindest einer weiteren Beschichtung versiegelt werden, die gemäß dem beschriebenen Verfahren aufgebracht wird. Es ist auch möglich, mehrere Beschichtungen nacheinander mit dem beschriebenen Verfahren aufzubringen.

Um das Risiko einer Tropfenbildung zu reduzieren, wird die Lagerkomponente zumindest während des Aushärtens mit einer ersten Rotationsgeschwindigkeit rotiert. Die erste Rotationsgeschwindigkeit kann eine gleichförmige Rotationsgeschwindigkeit oder eine getaktete Rotationsgeschwindigkeit sein, bei der die Lagerkomponente schrittweise weiterbewegt wird. Dadurch, dass die Lagerkomponente in Rotation gehalten wird, kann eine Tropfenbildung der Beschichtung während des Aushärtens verhindert werden. Dies hat ferner den Vorteil, dass eine homogenere Verteilung der Beschichtung und/oder eine gleichmäßigere Schichtdicke sichergestellt werden kann. Da insbesondere das Risiko eines Verlusts der Beschichtung durch Abtropfen der Beschichtung von der Lagerkomponente reduziert werden kann, kann auch das Risiko einer Verunreinigung der Arbeitsumgebung reduziert werden.

Unter dem Begriff Aushärten der Beschichtung wird insbesondere ein Verfestigen der Beschichtung an und/oder auf der Lagerkomponente und/oder einer bereits auf der Lagerkomponente aufgebrachten ersten Beschichtung verstanden.

Bevorzugt wird die Lagerkomponente zusätzlich während des Auftragens mit einer zweiten Rotationsgeschwindigkeit rotiert. Dadurch kann bereits beim Auftragen verhindert werden, dass sich Tropfen bilden und/oder die Beschichtung abtropft. Ferner kann durch die Rotation der Lagerkomponente auch ein gleichmäßigerer Auftrag der Beschichtung ermöglicht werden. Die zweite Rotationsgeschwindigkeit kann eine gleichförmige Rotationsgeschwindigkeit oder eine getaktete Rotationsgeschwindigkeit sein, bei der die Lagerkomponente schrittweise weiterbewegt wird.

Vorteilhafterweise kann zwischen dem Auftragen und dem Aushärten ein Trocknungsschritt vorgesehen sein, wobei die Lagerkomponente zusätzlich während des Trocknungsschritts mit einer dritten Rotationsgeschwindigkeit rotiert. Dies ermöglicht, die Beschichtung auf der Lagerkomponente möglichst gleichmäßig zu verteilen und während des gesamten Verfahrens, d.h. dem Auftragen, Trocknen und Aushärten der Beschichtung, eine Tropfenbildung und/oder anderweitige Bewegung der Beschichtung auf der Lagerkomponente zu verhindern. Die dritte Rotationsgeschwindigkeit kann eine gleichförmige Rotationsgeschwindigkeit oder eine getaktete Rotationsgeschwindigkeit sein, bei der die Lagerkomponente schrittweise weiterbewegt wird.

Durch den Trocknungsschritt kann insbesondere auch ermöglicht werden, dass eine Beschichtung, die zur Versiegelung einer porösen Schicht aufgetragen wird, in die Poren der porösen Schicht eindringen kann. Der Trocknungsschritt kann auch ermöglichen, dass die Beschichtung zumindest so an der Lagerkomponente anhaftet, dass zumindest eine weitere Schicht der Beschichtung und/oder zumindest eine weitere Beschichtung aufgetragen werden kann.

Gemäß einer weiteren Ausführungsform ist die erste Rotationsgeschwindigkeit, die zweite Rotationsgeschwindigkeit und/oder die dritte Rotationsgeschwindigkeit konstant. Dies bedeutet, dass die Rotationsgeschwindigkeit während der Schritte des Verfahrens konstant gehalten wird.

Alternativ können die erste Rotationsgeschwindigkeit, die zweite Rotationsgeschwindigkeit und/oder die dritte Rotationsgeschwindigkeit variabel sein. Mit anderen Worten kann die Rotationsgeschwindigkeit variiert werden. Beispielsweise kann die Rotationsgeschwindigkeit an eine Temperatur der Lagerkomponente, eine Umgebungstemperatur, eine Viskosität der Beschichtung und/oder eine Größe der Lagerkomponente angepasst werden. Eine variable Rotationsgeschwindigkeit hat den Vorteil, dass die Rotationsgeschwindigkeit an Änderungen der Umgebungstemperatur und/oder der Viskosität der Beschichtung angepasst werden kann. Zum Beispiel kann sich beim Aushärten durch eine einsetzende Vernetzung der Moleküle der Beschichtung die Viskosität der Beschichtung ändern. Auf diese Änderung kann durch eine variable Rotationsgeschwindigkeit reagiert werden.

Bevorzugt wird die Lagerkomponente auch bei eventuellen Zwischenschritten des Verfahrens in Rotation gehalten. Zum Beispiel kann, wenn die verschiedenen Verfahrensschritten an verschiedenen Stationen durchgeführt werden, die Lagerkomponente auch bei einem Transport zwischen den verschiedenen Stationen in Rotation gehalten werden, so dass das Risiko einer Tropfenbildung weiter reduziert werden kann.

Weiterhin kann die erste Rotationsgeschwindigkeit, die zweite Rotationsgeschwindigkeit und/oder die dritte Rotationsgeschwindigkeit gleich zueinander sein. Mit anderen Worten ändert sich die Rotationsgeschwindigkeit, mit der die Lagerkomponente rotiert wird, zwischen den verschiedenen Arbeitsschritten nicht. D. h. die Lagerkomponente rotiert sowohl beim Auftragen, beim Trocknen als auch beim Aushärten der Beschichtung mit derselben Geschwindigkeit.

Alternativ können die erste Rotationsgeschwindigkeit, die zweite Rotationsgeschwindigkeit und/oder die dritte Rotationsgeschwindigkeit verschieden zueinander sein. Beispielsweise kann die Rotationsgeschwindigkeit an eine Viskosität, eine Umgebungstemperatur, eine Temperatur der Beschichtung oder dergleichen angepasst sein. Beispielsweise kann die Rotation beim Auftragen unterschiedlich zu der Rotationsgeschwindigkeit nach dem Trocknen sein. Dies ermöglicht, die Rotationsgeschwindigkeit passend an die Viskosität der Beschichtung anzupassen, sodass sichergestellt werden kann, dass eine Tropfenbildung effizient verhindert werden kann und eine möglichst homogene Schichtdicke bei der Beschichtung erreicht wird.

Ferner kann das Aushärten bei einer Temperatur, die zwischen 15°C und 300°C liegt, erfolgen. Dies ermöglicht, dass die Beschichtung zuverlässig aushärtet und an der Lagerkomponente anhaftet. Insbesondere kann das Auftragen und/oder das Trocknen in einem Temperaturbereich erfolgen, der zwischen 0 °C und 300 °C liegt. Dies ermöglicht ein gleichmäßiges Auftragen der Beschichtung und Trocknen der Beschichtung.

Bevorzugt umfasst das Verfahren ferner ein Auswählen einer Rotationsgeschwindigkeit abhängig von einer Temperatur, einer Größe der Lagerkomponente und/oder einer Viskosität der Beschichtung. Beispielsweise kann die Rotationsgeschwindigkeit so gewählt werden, dass eine Umfangsgeschwindigkeit der Lagerkomponente in einem definierten Bereich liegt. Durch das Anpassen der Rotationsgeschwindigkeit abhängig von einer Temperatur, einer Größe der Lagerkomponente und/oder einer Viskosität der Beschichtung kann sichergestellt werden, dass einen Tropfenbildung effizient verhindert werden kann. Beispielsweise kann sichergestellt werden, dass die Lagerkomponente ausreichend schnell rotiert, um das Ausbilden von Tropfen zu verhindern. Auch kann sichergestellt werden, dass die Beschichtung nicht aufgrund zu hoher Fliehkräfte von der Lagerkomponente weggeschleudert wird, in dem die Rotationsgeschwindigkeit unter einer vorgegebenen Grenze bleibt.

Gemäß einem weiteren Aspekt wird eine Anordnung zum Aufbringen einer Beschichtung auf eine Lagerkomponente vorgeschlagen. Die Anordnung umfasst eine Vorrichtung, die dazu ausgebildet ist, eine Beschichtung auf eine Lagerkomponente aufzutragen, eine Haltevorrichtung, die dazu ausgebildet ist, die Lagerkomponente zu halten, und eine Aushärteeinrichtung, die dazu ausgebildet ist, die Beschichtung auf der Lagerkomponente auszuhärten, wobei die Halteeinrichtung dazu ausgebildet ist, die Lagerkomponente zumindest während des Aushärtens zu rotieren. Die Anordnung kann insbesondere dazu ausgebildet sein, das voranstehend beschriebene Verfahren auszuführen.

Insbesondere ist die Vorrichtung zum Auftragen einer Beschichtung auf die Lagerkomponente dazu ausgebildet, die Beschichtung kontaktlos aufzutragen. Die Vorrichtung kann beispielsweise ein Dosierungssystem mit einem Robotersystem und eine Düse zum Auftragen einer definierten Menge der Beschichtung sein. Insbesondere kann die Vorrichtung dazu ausgebildet sein, die Beschichtung bei einer definierten Temperatur zu halten.

Ferner kann die Haltevorrichtung dazu ausgebildet sein, die Lagerkomponente mit einer konstanten und/oder variablen Rotationsgeschwindigkeit zu rotieren. Insbesondere kann die Haltevorrichtung dazu ausgebildet sein, die Lagerkomponente sowohl beim Auftragen der Beschichtung als auch beim Trocknen der Beschichtung als auch beim Aushärten der Beschichtung mit einer vorgegebenen Rotationsgeschwindigkeit zu rotieren. Die Rotationsgeschwindigkeit kann eine gleichförmige Rotationsgeschwindigkeit oder eine getaktete Rotationsgeschwindigkeit sein, bei der die Lagerkomponente schrittweise weiterbewegt wird.

Alle Merkmale und/oder Vorteile, die im Zusammenhang mit dem voranstehend beschriebenen Verfahren zum Aufbringen einer Beschichtung auf eine Lagerkomponente genannt wurden, gelten auch für die Anordnung zum Aufbringen einer Beschichtung auf eine Lagerkomponente.

Weitere Vorteile und vorteilhafte Ausführungsformen sind in der Beschreibung, den Zeichnungen und den Ansprüchen angegeben. Dabei sind insbesondere die in der Beschreibung und in den Zeichnungen angegebenen Kombinationen der Merkmale rein exemplarisch, so dass die Merkmale auch einzeln oder anders kombiniert vorliegen können.

### Kurze Figurenbeschreibung

Im Folgenden soll die Erfindung anhand von in den Zeichnungen dargestellten Ausführungsbeispielen näher beschrieben werden. Dabei sind die Ausführungsbeispiele und die in den Ausführungsbeispielen gezeigten Kombinationen rein exemplarisch und sollen nicht den Schutzbereich der Erfindung festlegen. Dieser wird allein durch die anhängigen Ansprüche definiert.

Es zeigen:
Fig. 1: eine schematische Darstellung eines Verfahrens zum Auftragen einer Beschichtung auf eine Lagerkomponente gemäß einer Ausführungsform,
Fig. 2: eine schematische Darstellung einer Anordnung zum Auftragen einer Beschichtung auf eine Lagerkomponente gemäß einer Ausführungsform,
Fig. 3: einen Ausschnitt der Anordnung zum Auftragen einer Beschichtung auf eine Lagerkomponente der Fig. 2, und
Fig. 4: eine Haltevorrichtung der Anordnung zum Auftragen einer Beschichtung auf eine Lagerkomponente der Fig. 2.

### Detaillierte Beschreibung der Erfindung

Im Folgenden werden gleiche oder funktionell gleichwirkende Elemente mit denselben Bezugszeichen gekennzeichnet.

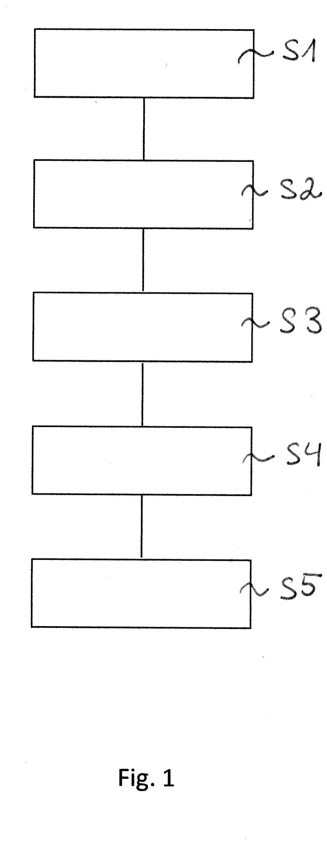

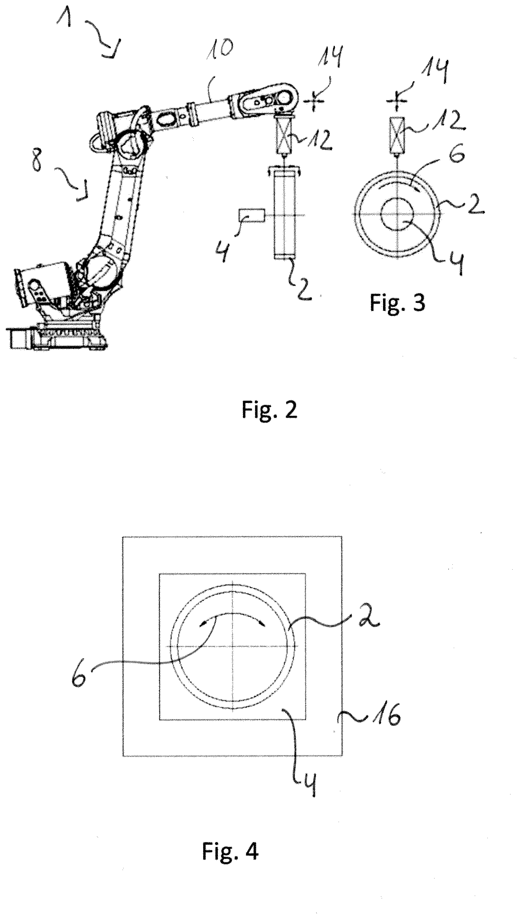

Fig. 1 zeigt eine schematische Darstellung eines Verfahrens zum Aufbringen einer Beschichtung auf eine Lagerkomponente 2 und Fig. 2 bis 4 zeigen eine Anordnung 1 zum Aufbringen einer Beschichtung auf die Lagerkomponente 3 mit dem Verfahren. In einem ersten Schritt S1 wird die Lagerkomponente 2 bereitgestellt. In den Figuren ist die Lagerkomponente als Lagerring dargestellt. Alternativ kann die Lagerkomponente auch ein Wälzkörper wie beispielsweise eine Zylinderrollen, eine Kegelrolle, eine Nadelrolle, eine Pendelrolle oder dergleichen sein.

Bei der Beschichtung kann es sich insbesondere um eine Versiegelung, wie beispielsweise eine Farbe, ein Lack, ein Harz, eine Harzgemisch, oder dergleichen handeln. Ferner kann die Beschichtung auch über eine bereits aufgetragene erste Beschichtung aufgetragen werden. Insbesondere kann die erste Beschichtung eine thermische Spritzschicht sein. Beispielsweise kann die erste Beschichtung mit einem Plasmasprayverfahren aufgetragen sein und eine poröse Oberfläche aufweisen. Diese poröse Oberfläche kann dann wiederum mit einer zumindest einer weiteren Beschichtung versiegelt werden, die gemäß dem beschriebenen Verfahren aufgebracht wird. Es ist auch möglich, mehrere Beschichtungen nacheinander mit dem beschriebenen Verfahren aufzubringen.

In einem Schritt S2 wird die Lagerkomponente an einer Haltevorrichtung 4 montiert, die dazu ausgebildet ist, die Lagerkomponente mit einer vorgegebenen Rotationsgeschwindigkeit zu rotieren (dargestellt durch Pfeil 6). Die Rotationsgeschwindigkeit kann abhängig von einer Temperatur, insbesondere einer Umgebungstemperatur und/oder eine Beschichtungstemperatur, einer Größe der Lagerkomponente und/oder einer Viskosität der Beschichtung gewählt sein. Die Rotationsgeschwindigkeit kann eine gleichförmige Rotationsgeschwindigkeit oder eine getaktete Rotationsgeschwindigkeit sein, bei der die Lagerkomponente 2 schrittweise weiterbewegt wird.

Nachdem die Lagerkomponente 2 in der Haltevorrichtung 4 montiert ist und in Rotation versetzt wurde, wird in einem Schritt S3 eine definierte Menge einer Beschichtung auf die Lagerkomponente 2 aufgetragen. Wie in der Fig. 2 gesehen werden kann, erfolgt das Auftragen der definierten Menge der Beschichtung über einen Dosierungssystem 8 mit einem Robotersystem 10, dass eine Düse 12 umfasst, die dazu ausgebildet ist, eine definierte Menge der Beschichtung auf die Lagerkomponente 2, insbesondere kontaktlos, zu sprühen. Das Dosiersystem ist bevorzugt dazu ausgebildet, eine definierte Menge der Beschichtung pro Fläche reproduzierbar aufzubringen.

Ferner kann das Dosiersystem ausgebildet sein, eine Temperatur der Beschichtung beim Auftragen zu kontrollieren, so dass die Beschichtung mit einer definierten Temperatur auf die Lagerkomponente 2 aufgebracht wird.

Um einen gleichmäßigen Auftrag der Beschichtung zu erreichen, wird zum einen die Lagerkomponente 2 durch die Haltevorrichtung 4 gedreht, und zum anderen kann das Robotersystem bevorzugt in allen Raumfreiheitsgraden bewegt werden, wie durch Pfeile 14 angedeutet ist.

Nachdem die Beschichtung auf die Lagerkomponente 2 aufgetragen wurde, wird einem Schritt S4 die Beschichtung zunächst getrocknet, wobei die Haltevorrichtung 4 die Lagerkomponente 2 weiter in Rotation hält, so dass die Beschichtung auf der Lagerkomponente 2 möglichst gleichmäßig zu verteilt bleibt und eine möglichst homogene Schichtdicke erreicht wird. Dieser Schritt kann beispielsweise ermöglichen, dass die Beschichtung in eine poröse Oberfläche der Lagerkomponente 2 eindringen kann. Es ist auch vorstellbar, dass nach dem Trocknen zumindest eine weitere Beschichtung aufgetragen wird. Insbesondere können die Schritte S3 und S4 so oft mit der gleichen Beschichtung und/oder einer anderen Beschichtung wiederholt werden, bis eine gewünschte Schichtdicke und/oder Beschichtungsabfolge erreicht ist.

Nachdem die Beschichtung getrocknet wurde, wird in einem Schritt S5 die Haltevorrichtung 4 mit der Lagerkomponente eine Aushärteeinrichtung 16 gebracht, um die Beschichtung final auszuhärten. Um das Risiko einer Tropfenbildung zu reduzieren, wird die Lagerkomponente während des Aushärtens mit einer vorgegebenen Rotationsgeschwindigkeit rotiert. Das Aushärten kann abhängig von der Beschichtung bei einer Temperatur, die zwischen 15°C und 300°C liegt, erfolgen.

Bei dem beschriebenen Verfahren wird die Lagerkomponente 1 während des Auftragens, des Trocknens und des Aushärtens der Beschichtung rotiert. Es ist jedoch alternativ möglich, die Lagerkomponente 2 nur während des Aushärtens und/oder während des Trocknens und Aushärtens oder während des Auftragens und Aushärtens zu rotieren. Bevorzugt wird die Lagerkomponente 2 auch dann in Rotation gehalten, wenn die verschiedenen Verfahrensschritten an verschiedenen Stationen durchgeführt werden und die Lagerkomponente 2 und/oder die Haltevorrichtung 4 zwischen den verschiedenen Stationen transportiert wird.

Bevorzugt wird die Geschwindigkeit, mit der die Lagerkomponente 2 rotiert wird, unter anderem an die Viskosität der Beschichtung variable angepasst. Zum Beispiel kann sich beim Aushärten durch eine einsetzende Vernetzung der Moleküle der Beschichtung die Viskosität der Beschichtung ändern. Auf diese Änderung kann durch eine variable Rotationsgeschwindigkeit reagiert werden. Es ist aber auch möglich, die Rotationsgeschwindigkeit konstant zu halten.

Weiterhin kann die Rotationsgeschwindigkeit beim Auftragen, Trocken und Aushärten der Beschichtung gleich sein. Alternativ kann sich die Rotationsgeschwindigkeit beim Auftragen, Trocken und Aushärten unterscheiden. Wie bereits erwähnt, kann die Rotationsgeschwindigkeit an eine Viskosität, eine Umgebungstemperatur, eine Temperatur der Beschichtung oder dergleichen angepasst werden. Dies ermöglicht, die Rotationsgeschwindigkeit passend an die Viskosität der Beschichtung anzupassen, sodass sichergestellt werden kann, dass eine Tropfenbildung effizient verhindert werden kann und eine möglichst homogene Schichtdicke und/oder Verteilung bei der Beschichtung erreicht wird. Auch kann sichergestellt werden, dass die Beschichtung nicht aufgrund zu hoher Fliehkräfte von der Lagerkomponente 2 weggeschleudert wird, in dem die Rotationsgeschwindigkeit unter einer vorgegebenen Grenze bleibt.

Zusammenfassend wird ein Verfahren und eine Anordnung zum Auftragen einer Beschichtung auf eine Lagerkomponente bereitgestellt, bei dem bzw. der das Risko für eine Tropfenbildung reduziert ist. Durch die aktive Rotation der Lagerkomponente 2 zumindest beim Aushärten der Beschichtung kann eine gleichmäßige und homogen Verteilung der Beschichtung sichergestellt werden. Dadurch kann vermieden werden, dass die Beschichtung durch Tropfenbildung von der Lagerkomponente herunterrinnt und infolgedessen, keine ausreichende Beschichtung erreicht werden kann. Des Weiteren kann eine Tropfenbildung reduziert oder sogar vermieden werden, wodurch eine aufwendige Nachbearbeitung der Lagerkomponente zur Entfernung der Tropfen entfallen kann. Zusätzlich kann vermieden werden, dass sich eine Beschichtung auf Flächen der Lagerkomponente 2 verteilt, die nicht beschichtet werden sollen, wie zum Beispiel eine Laufbahn eines Lagerrings.

### Bezugszeichenliste

- 1: Anordnung
- 2: Lagerkomponente
- 4: Haltevorrichtung
- 6: Pfeil
- 8: Dosierungssystem
- 10: Robotersystem
- 12: Düse
- 14: Pfeil
- 16: Aushärteeinrichtung

- S1 - S5: Verfahrensschritte

## Patentansprüche

1. Verfahren zum Aufbringen einer Beschichtung auf eine Lagerkomponente (2), wobei das Verfahren, die folgenden Schritte umfasst:
Bereitstellen (S1) einer Lagerkomponente(2),
Auftragen (S3) einer definierten Menge einer Beschichtung,
Aushärten (S5) der Beschichtung,
**dadurch gekennzeichnet, dass**
die Lagerkomponente (2) zumindest während des Aushärtens mit einer ersten Rotationsgeschwindigkeit rotiert.

2. Verfahren nach Anspruch 1, wobei die Lagerkomponente (2) zusätzlich während des Auftragens mit einer zweiten Rotationsgeschwindigkeit rotiert.

3. Verfahren nach Anspruch 1 oder 2, wobei zwischen dem Auftragen (S3) und dem Aushärten (S5) ein Trocknungsschritt (S4) vorgesehen ist, wobei die Lagerkomponente (2) zusätzlich während des Trocknungsschritts (S4) mit einer dritten Rotationsgeschwindigkeit rotiert.

4. Verfahren nach einem der vorherigen Ansprüche, wobei die erste Rotationsgeschwindigkeit, die zweite Rotationsgeschwindigkeit und/oder die dritte Rotationsgeschwindigkeit konstant ist.

5. Verfahren nach einem der Ansprüche 1 bis 3, wobei die erste Rotationsgeschwindigkeit, die zweite Rotationsgeschwindigkeit und/oder die dritte Rotationsgeschwindigkeit variabel ist.

6. Verfahren nach einem der vorherigen Ansprüche, wobei die erste Rotationsgeschwindigkeit, die zweite Rotationsgeschwindigkeit und/oder die dritte Rotationsgeschwindigkeit gleich zueinander sind.

7. Verfahren nach einem der Ansprüche 1 bis 5, wobei die erste Rotationsgeschwindigkeit, die zweite Rotationsgeschwindigkeit und/oder die dritte Rotationsgeschwindigkeit verschieden zueinander sind.

8. Verfahren nach einem der vorherigen Ansprüche, wobei das Verfahren ferner ein Auswählen einer Rotationsgeschwindigkeit abhängig von einer Temperatur, einer Größe der Lagerkomponente und/oder einer Viskosität der Beschichtung umfasst.

9. Anordnung (1) zum Aufbringen einer Beschichtung auf eine Lagerkomponente (2), wobei die Anordnung eine Vorrichtung (8), die dazu ausgebildet ist, eine Beschichtung auf eine Lagerkomponente (2) aufzutragen, eine Haltevorrichtung (4), die dazu ausgebildet ist, die Lagerkomponente (2) zu halten, und eine Aushärteeinrichtung (16) aufweist, die dazu ausgebildet ist, die Beschichtung auf der Lagerkomponente (2) auszuhärten, **dadurch gekennzeichnet, dass** die Halteeinrichtung (4) dazu ausgebildet ist, die Lagerkomponente (2) zumindest während des Aushärtens zu rotieren.

10. Anordnung nach Anspruch 9, wobei die Halteeinrichtung (4) dazu ausgebildet ist, die Lagerkomponente (2) mit einer konstanten und/oder variablen Rotationsgeschwindigkeit zu rotieren.
